# EUROPEAN PATENT APPLICATION

(11) **EP 4 836 319 A1**
(43) Date of publication of application: **04.11.2026**
(21) Application number: 25751198.0
(22) Date of filing: 21.01.2025
(51) Int. Cl.: H04B 10/079

(54) **OPTICAL TRANSMISSION PERFORMANCE DETERMINATION METHOD AND APPARATUS**

(30) Priority: 06.02.2024 CN 202410171530; 20.02.2024 CN 202410188773
(71) Applicant: Huawei Technologies Co., Ltd., Shenzhen, Guangdong 518129 (CN)
(72) Inventor: MI, Guangcan, Shenzhen, Guangdong 518129 (CN); HE, Xiang, Shenzhen, Guangdong 518129 (CN); REN, Hao, Shenzhen, Guangdong 518129 (CN); CAI, Yuefeng, Shenzhen, Guangdong 518129 (CN)
(74) Representative: Huawei European IPR
(86) International application number: PCT/CN2025/073687
(87) International publication number: WO 2025/167596

(57) **Abstract**

Embodiments of this application provide a method for determining optical transmission performance, where the method is applied to a first apparatus. The method includes: receiving an optical signal sent by a second apparatus via an optical module; performing optical-to-electrical conversion on the optical signal to obtain a first electrical signal; adding first noise to the first electrical signal to obtain a second electrical signal; performing FEC decoding on the second electrical signal, to determine a first error ratio of the second electrical signal; and determining an optical transmission performance parameter with reference to a quantitative relationship between the first error ratio and a target error ratio. The target error ratio is a high error ratio. If the first error ratio is equal to the target error ratio, it indicates that after the first noise is added to the first electrical signal, the error ratio of the second electrical signal deteriorates to the target error ratio. Therefore, the first apparatus may determine, based on the first noise, the optical transmission performance parameter used to measure optical transmission performance. It can be learned that the optical transmission performance may be determined according to the solution in embodiments of this application.

## Description

This application claims priorities to Chinese Patent Application No. 202410171530.6, filed with the China National Intellectual Property Administration on February 6, 2024, and entitled "METHOD AND APPARATUS FOR DETERMINING OPTICAL TRANSMISSION PERFORMANCE", and to Chinese Patent Application No. 202410188773.0, filed with the China National Intellectual Property Administration on February 20, 2024, and entitled "METHOD AND APPARATUS FOR DETERMINING OPTICAL TRANSMISSION PERFORMANCE", both of which are incorporated herein by reference in their entireties.

### TECHNICAL FIELD

This application relates to the communication field, and in particular, to a method and an apparatus for determining optical transmission performance.

### BACKGROUND

Transmission of data between apparatuses may be performed in the form of optical signals. An optical module is an important device for implementing communication between the apparatuses. In some scenarios, a transmitter apparatus and a receiver apparatus may be connected through an optical fiber. Both the transmitter apparatus and the receiver apparatus include an optical module. The optical module included in the transmitter apparatus may convert an electrical signal to be transmitted into an optical signal. After being transmitted through the optical fiber, the optical signal may be received by the optical module included in the receiver apparatus. After receiving the optical signal, the optical module in the receiver apparatus may convert the received optical signal into an electrical signal. Further, other devices included in the receiver apparatus may further process the electrical signal.

Optical transmission performance has a significant impact on reliability of the communication between the apparatuses. The optical transmission performance may characterize quality of the optical signal sent by the transmitter apparatus, and the quality of the optical signal further affects the reliability of the communication between the apparatuses.

How to determine the optical transmission performance is a problem that needs to be urgently resolved currently.

### SUMMARY

Embodiments of this application provide a method and an apparatus for determining optical transmission performance, to determine the optical transmission performance.

According to a first aspect, an embodiment of this application provides a method for determining optical transmission performance. The method may be applied to a first apparatus, and the first apparatus may be, for example, a test apparatus. The first apparatus may receive an optical signal sent by a second apparatus via an optical module. After receiving the optical signal, the first apparatus may first perform optical-to-electrical conversion on the optical signal to obtain a first electrical signal. Further, an optical transmission performance parameter is determined with reference to the first electrical signal. In a specific example, the first apparatus may add first noise to the first electrical signal to obtain a second electrical signal. Further, forward error correction (forward error correction, FEC) decoding is performed on the second electrical signal, to determine a first error ratio of the second electrical signal. In an example, the optical transmission performance parameter may be determined with reference to a quantitative relationship between the first error ratio and a target error ratio. The target error ratio is a high error ratio. Specifically, if the first error ratio is equal to the target error ratio, it indicates that after the first noise is added to the first electrical signal, the error ratio of the second electrical signal deteriorates to the target error ratio. Therefore, the first noise can represent, to a specific extent, quality of the optical signal sent by the second apparatus. In other words, the first noise can represent optical transmission performance to a specific extent. Therefore, the first apparatus may determine, based on the first noise, the optical transmission performance parameter used to measure the optical transmission performance. It can be learned that the optical transmission performance may be determined according to the solution in embodiments of this application.

In a possible implementation, the second apparatus and/or the optical module may encode data to obtain encoded data. Further, the optical module performs electrical-to-optical conversion on the encoded data, to obtain the optical signal, and sends the optical signal to the first apparatus. In other words, the optical signal may be an optical signal obtained by performing the electrical-to-optical conversion by the optical module on the encoded data, and the encoded data is data obtained by encoding the data. In this case, according to the solution in embodiments of this application, the optical transmission performance may be determined in a scenario in which the optical signal is the optical signal obtained by performing the electrical-to-optical conversion by the optical module on the encoded data.

In a possible implementation, the encoded data is data obtained by performing FEC encoding on the data. For example, the second apparatus or the optical module may encode the data to obtain the encoded data. In this case, according to the solution in embodiments of this application, the optical transmission performance is determined in a scenario in which the second apparatus or the optical module performs the FEC encoding on the data.

In a possible implementation, the encoded data is data obtained by performing concatenated FEC encoding on the data. For example, the second apparatus and/or the optical module may encode the data to obtain the encoded data. In this case, according to the solution in embodiments of this application, the optical transmission performance is determined in a scenario in which the second apparatus or the optical module performs the concatenated FEC encoding on the data. A process of the concatenated FEC encoding may include: first performing outer encoding on the data, to obtain outer encoded data; and then performing inner encoding on the outer encoded data, to obtain inner encoded data. In a scenario of the concatenated FEC encoding, the encoded data obtained by performing the concatenated encoding like the concatenated FEC encoding on the data is the foregoing inner encoded data.

In a possible implementation, if the encoded data is the data obtained by performing the concatenated FEC encoding on the data, in an example, the second apparatus may perform the concatenated FEC encoding on the data, and send, to the optical module, the obtained encoded data. That is, both the inner encoding and the outer encoding are performed by the second apparatus.

In a possible implementation, if the encoded data is the data obtained by performing the concatenated FEC encoding on the data, in an example, the second apparatus may perform the outer encoding on the data, to obtain the outer encoded data; and send, to the optical module, the outer encoded data. Further, the optical module performs the inner encoding on the outer encoded data, to obtain the inner encoded data. That is, the outer encoding is performed by the second apparatus, and the inner encoding is performed by the optical module.

In a possible implementation, the first error ratio may be a bit error ratio (bit error ratio, BER), a symbol error ratio (symbol error ratio, SER), or a codeword error ratio (codeword error ratio, CER). The bit error ratio may also be referred to as a bit error rate, and may be a ratio of a quantity of error bits in decoded data to a total quantity of bits in the decoded data. The symbol error ratio may also be referred to as a symbol error rate, and may be a ratio of a quantity of error symbols in the decoded data to a total quantity of symbols in the decoded data. The codeword error ratio may also be referred to as a codeword error rate, and may be a ratio of a quantity of error codewords in the decoded data to a total quantity of codewords in the decoded data. In a scenario in which the foregoing encoded data is the data obtained by performing the concatenated FEC encoding on the data, the codeword mentioned herein may be an inner codeword.

In a possible implementation, after obtaining the second electrical signal, the first apparatus may further process the second electrical signal by using a signal recovery device, to obtain a third electrical signal. Further, FEC decoding is performed on the third electrical signal to obtain the decoded data. After the decoded data is obtained, an error ratio of the third electrical signal may be obtained based on the decoded data. In this embodiment of this application, the error ratio of the third electrical signal may be used as the first error ratio. The third electrical signal is a signal obtained by performing signal recovery on the second electrical signal. Therefore, in comparison with determining the first error ratio directly based on the second electrical signal, determining the first error ratio based on the third electrical signal may obtain a smaller error ratio. Correspondingly, the determined optical transmission performance parameter may be more accurate.

In a possible implementation, in an example, before processing the second electrical signal by using the signal recovery device, the first apparatus may further adjust a parameter of the signal recovery device based on the first noise, so that the signal recovery device can be adjusted to a proper status. Correspondingly, when the second electrical signal is processed by using the signal recovery device, the second electrical signal is processed by using the signal recovery device with the adjusted parameter, to obtain the third electrical signal. In this manner, a small first error ratio may be determined. Correspondingly, the determined optical transmission performance may be more accurate.

In a possible implementation, during specific implementation of obtaining the error ratio of the third electrical signal based on the decoded data, the decoded data may be compared with the data, to obtain the error ratio of the third electrical signal. For example, in a scenario in which the encoded data is the data obtained by performing the FEC encoding on the data, the decoded data may be directly compared with the data, to obtain the error ratio of the third electrical signal. For another example, in the scenario in which the encoded data is the data obtained by performing the concatenated FEC encoding on the data, the decoded data may be compared with the outer encoded data obtained by performing the outer encoding on the data, to obtain the error ratio of the third electrical signal.

In a possible implementation, considering that an error ratio of an electrical signal can alternatively be determined based on an eye diagram of the electrical signal, in some implementations, the first apparatus may further obtain an eye diagram corresponding to the third electrical signal. Further, a second error ratio of the third electrical signal is determined based on the eye diagram corresponding to the third electrical signal. Correspondingly, in a scenario in which the second error ratio is obtained based on the eye diagram of the third electrical signal, during specific implementation of determining the optical transmission performance parameter, in response to the first error ratio being equal to the target error ratio, the first apparatus may determine the optical transmission performance parameter based on the first error ratio and the second error ratio. In this manner, in comparison with determining the optical transmission performance parameter with reference to only the first error ratio, the determined optical transmission performance parameter is more accurate and reliable.

In a possible implementation, before the encoded data is converted into the optical signal, signal modulation may be further performed. In other words, the optical signal is obtained by modulating the encoded data. In an example, intensity modulation (intensity modulation, IM) may be performed on the encoded data. In another example, coherent modulation may be performed on the encoded data.

In a possible implementation, in a scenario in which the intensity modulation is performed on the encoded data, a specific scheme of performing the intensity modulation on the encoded data may be 4-level pulse amplitude modulation (4 pulse amplitude modulation, PAM4), or may be 6-level pulse amplitude modulation (6 pulse amplitude modulation, PAM6). In this case, according to the solution in embodiments of this application, the optical transmission performance may be determined in the scenario in which the intensity modulation is performed on encoded data.

In a possible implementation, in a scenario in which the coherent modulation is performed on the encoded data, a specific scheme of performing the coherent modulation on the encoded data may be dual polarization 16-state quadrature amplitude modulation (dual polarization 16-state quadrature amplitude modulation, DP-16QAM), dual polarization 32-state quadrature amplitude modulation (dual polarization 32-state quadrature amplitude modulation, DP-32QAM), or dual polarization 64-state quadrature amplitude modulation (dual polarization 64-state quadrature amplitude modulation, DP-64QAM). In this case, according to the solution in embodiments of this application, the optical transmission performance may be determined in the scenario in which the coherent modulation is performed on encoded data.

In a possible implementation, if the optical signal is obtained by performing the intensity modulation on the encoded data, the signal recovery device is an equalizer. Correspondingly, during specific implementation of processing the second electrical signal by using the signal recovery device, the first apparatus may perform equalization on the second electrical signal by using the equalizer.

In a possible implementation, if the optical signal is obtained by performing the coherent modulation on the encoded data, the signal recovery device may include an equalizer and a signal compensator. Correspondingly, during specific implementation of processing the second electrical signal by using the signal recovery device, the first apparatus may perform equalization and signal compensation on the second electrical signal by using the equalizer and the signal compensator.

In a possible implementation, during specific implementation of determining the optical transmission performance parameter based on the first noise, the first apparatus may determine the optical transmission performance parameter with reference to the first noise and second noise. The second noise may be noise added to a noise-free ideal signal. Specifically, the second noise may be determined in the following manner: obtaining a fourth electrical signal based on the noise-free ideal signal; and adding noise to the fourth electrical signal to obtain a fifth electrical signal; performing FEC decoding on the fifth electrical signal, to determine a third error ratio of the fifth electrical signal; and in response to the third error ratio being equal to the target error ratio, determining, as the second noise, the noise added to the fourth electrical signal. It can be learned from the foregoing descriptions that, after the first noise is added to the first electrical signal, the error ratio of the second electrical signal deteriorates to the target error ratio, and after the second noise is added to the fourth electrical signal corresponding to the ideal signal, the error ratio of the second electrical signal deteriorates to the target error ratio. Therefore, a quantitative relationship between the first noise and the second noise may represent the quality of the optical signal sent by the second apparatus. Therefore, in this scenario, the optical transmission performance parameter may be determined based on the first noise and the second noise.

In a possible implementation, considering that a ratio between power of the second noise and power of the first noise may represent a difference between the power of the first noise and the power of the second noise, the optical transmission performance parameter may be determined based on the ratio between the power of the second noise and the power of the first noise.

In a possible implementation, the data may be service data. In this scenario, the optical transmission performance may be determined based on the service data.

In a possible implementation, the data may be a preset test sequence. That is, the preset test sequence may be used to test the optical transmission performance. In a specific scenario, before the optical module is delivered from a factory, the optical module may be inserted into a receptacle reserved in the second apparatus, and the optical transmission performance is tested by using the preset test sequence.

In a possible implementation, the test sequence may be any sequence suitable for testing the optical transmission performance. In a specific example, the test sequence may be any one of a pseudo-random sequence, a square wave, a short stress pattern random quaternary (short stress pattern random quaternary, SSPRQ) sequence, or a scrambled idle sequence. The pseudo-random sequence may be a pseudo-random binary sequence (pseudo-random binary sequence, PRBS). In other words, in this embodiment of this application, any one of the pseudo-random sequence, the square wave, the short stress pattern random quaternary sequence, or the scrambled idle sequence may be used as the test sequence to test the optical transmission performance, so that the optical transmission performance is obtained.

In a possible implementation, a codeword included in the encoded data may be any one of a Hamming (Hamming code) code, a BCH (Bose-Chaudhuri-Hocquenghem) code, a low-density parity-check (low-density parity-check, LDPC) code, a Reed-Solomon (Reed-Solomon, RS) code, and an RM (Reed-Muller, RM) code. Specifically, in a scenario in which the encoded data is FEC encoded data, a type of an FEC codeword included in the encoded data may be any one of a Hamming code, a BCH code, an LDPC code, an RS code, and an RM code. In a scenario in which the encoded data is concatenated FEC encoded data, a type of an inner codeword or an outer codeword included in the encoded data may be any one of a Hamming code, a BCH code, an LDPC code, an RS code, and an RM code.

In a possible implementation, the foregoing optical transmission performance parameter may be a transmitter and dispersion eye closure quaternary (transmitter and dispersion eye closure quaternary, TDECQ), a transmitter eye closure quaternary (transmitter eye closure quaternary, TECQ), or a transmitter constellation closure (transmitter constellation closure, TCC). In a specific example, if the optical signal is obtained by performing the intensity modulation on the encoded data, the optical transmission performance parameter may be the TDECQ or the TECQ. If the optical signal is obtained by performing the coherent modulation on the encoded data, the optical transmission performance parameter may be the TCC.

In a possible implementation, if the optical signal is obtained by performing the intensity modulation on the encoded data, during specific implementation of performing the optical-to-electrical conversion on the optical signal to obtain the first electrical signal, the first apparatus may perform the optical-to-electrical conversion on the optical signal by using an optical-to-electrical converter, for example, a photodiode, to obtain the first electrical signal.

In a possible implementation, if the optical signal is obtained by performing the coherent modulation on the encoded data, during specific implementation of performing the optical-to-electrical conversion on the optical signal to obtain the first electrical signal, the first apparatus may process the optical signal by using a polarization beam splitter, an optical local oscillator, and an oscilloscope, to obtain the first electrical signal. Specifically, the first apparatus may split the optical signal into two optical signals by using the polarization beam splitter, and mix the two optical signals with an optical signal of the optical local oscillator by using a 90 degree hybrid, to obtain four processed optical signals. Four electrical signals are obtained by performing optical-to-electrical conversion of four balanced detectors on the four processed optical signals. Further, the four electrical signals are input to the oscilloscope, to obtain the first electrical signal.

According to a second aspect, an embodiment of this application provides a method for determining optical transmission performance. The method may be applied to a second apparatus. The second apparatus may send, to a first apparatus via an optical module, data that includes a preset test sequence, to facilitate the first apparatus to determine an optical transmission performance parameter based on the data. Specifically, the optical module may perform electrical-to-optical conversion on the data to obtain an optical signal, and send the optical signal to the first apparatus. In an example, the optical signal is an optical signal obtained by performing electrical-to-optical conversion on encoded data obtained by performing encoding of the optical module on the data. In other words, according to the solution in embodiments of this application, in a scenario in which a transmitter apparatus performs FEC encoding on data before converting the data into an optical signal and sending the optical signal to a receiver, optical transmission performance may be determined. The transmitter apparatus mentioned herein may be the second apparatus into which the optical module is inserted.

For determining the optical transmission performance parameter, the data, and the encoded data by the first apparatus based on the data, refer to related descriptions in the first aspect. Details are not described herein again.

According to a third aspect, an embodiment of this application provides an apparatus for determining optical transmission performance, where the apparatus is used in a first apparatus. The apparatus includes units for performing the method according to any one of the first aspect and the implementations of the first aspect. In a specific example, the apparatus for determining optical transmission performance includes a receiving unit and a processing unit. The receiving unit is configured to receive an optical signal sent by a second apparatus via an optical module. The processing unit is configured to: perform optical-to-electrical conversion on the optical signal to obtain a first electrical signal, add first noise to the first electrical signal to obtain a second electrical signal, perform forward error correction FEC decoding on the second electrical signal, determine a first error ratio of the second electrical signal, and in response to the first error ratio being equal to a target error ratio, determine an optical transmission performance parameter based on the first noise.

In a possible implementation, the optical signal is an optical signal obtained by performing electrical-to-optical conversion by the optical module on encoded data, and the encoded data is data obtained by encoding data.

In a possible implementation, the encoded data is data obtained by performing FEC encoding on the data.

In a possible implementation, the encoded data is data obtained by performing concatenated FEC encoding on the data, and the concatenated FEC encoding includes inner encoding and outer encoding.

In a possible implementation, performing the FEC decoding on the second electrical signal includes: performing inner decoding on the second electrical signal.

In a possible implementation, the outer encoding is performed by the second apparatus, and the inner encoding is performed by the optical module; or both the inner encoding and the outer encoding are performed by the second apparatus.

In a possible implementation, the first error ratio includes a bit error ratio BER, a symbol error ratio SER, or a codeword error ratio CER.

In a possible implementation, performing the forward error correction FEC decoding on the second electrical signal, and determining the first error ratio of the second electrical signal includes: processing the second electrical signal by using a signal recovery device, to obtain a third electrical signal; and performing FEC decoding on the third electrical signal, and using an error ratio of the third electrical signal as the first error ratio.

In a possible implementation, the processing unit is further configured to: before the first apparatus processes the second electrical signal by using the signal recovery device, adjust a parameter of the signal recovery device based on the first noise. Correspondingly, processing the second electrical signal by using the signal recovery device, to obtain the third electrical signal includes: processing the second electrical signal by using the signal recovery device with the adjusted parameter, to obtain the third electrical signal.

In a possible implementation, decoding the third electrical signal, and using the error ratio of the third electrical signal as the first error ratio includes: decoding the third electrical signal to obtain decoded data; comparing the decoded data with the data, to obtain the error ratio of the third electrical signal; and using the error ratio of the third electrical signal as the first error ratio.

In a possible implementation, the processing unit is further configured to: obtain an eye diagram corresponding to the third electrical signal; and determine a second error ratio of the third electrical signal based on the eye diagram corresponding to the third electrical signal. In response to the first error ratio being equal to the target error ratio, determining the optical transmission performance parameter based on the first noise includes: in response to the first error ratio being equal to the target error ratio, determining the optical transmission performance parameter based on the first error ratio and the second error ratio.

In a possible implementation, processing the second electrical signal by using the signal recovery device, to obtain the third electrical signal includes: performing equalization on the second electrical signal by using the signal recovery device, to obtain the third electrical signal.

In a possible implementation, processing the second electrical signal by using the signal recovery device, to obtain the third electrical signal includes: performing equalization and signal compensation on the second electrical signal by using the signal recovery device, to obtain the third electrical signal.

In a possible implementation, determining the optical transmission performance parameter based on the first noise includes: determining the optical transmission performance parameter based on the first noise and second noise, where the second noise is determined in the following manner: obtaining a fourth electrical signal based on a noise-free ideal signal, and adding noise to the fourth electrical signal to obtain a fifth electrical signal; performing FEC decoding on the fifth electrical signal, to determine a third error ratio of the fifth electrical signal; and in response to the third error ratio being equal to the target error ratio, determining, as the second noise, the noise added to the fourth electrical signal.

In a possible implementation, determining the optical transmission performance parameter based on the first noise and the second noise includes: determining the optical transmission performance parameter based on a ratio between power of the second noise and power of the first noise.

In a possible implementation, the data is a preset test sequence.

In a possible implementation, the test sequence includes a pseudo-random sequence, a square wave, a short stress pattern random quaternary sequence, or a scrambled idle sequence.

In a possible implementation, a codeword type corresponding to an inner codeword or an outer codeword included in the encoded data includes any one of the following: a Hamming code, a BCH code, a low-density parity-check LDPC code, an RS code, and an RM code.

In a possible implementation, the optical signal is obtained by performing intensity modulation on the encoded data; or the optical signal is obtained by performing coherent modulation on the encoded data.

In a possible implementation, when the intensity modulation is used, a modulation scheme of the encoded data includes 4-level pulse amplitude modulation PAM4 or 6-level pulse amplitude modulation PAM6.

In a possible implementation, when the coherent modulation is used, a modulation scheme of the encoded data includes: dual polarization 16-state quadrature amplitude modulation DP-16QAM, or dual polarization 32-state quadrature amplitude modulation DP-32QAM.

In a possible implementation, the optical transmission performance parameter includes: a transmitter and dispersion eye closure quaternary TDECQ, a transmitter eye closure quaternary TECQ, or a transmitter constellation closure TCC.

In a possible implementation, performing the optical-to-electrical conversion on the optical signal to obtain the first electrical signal includes: performing the optical-to-electrical conversion on the optical signal by using a photodiode, to obtain the first electrical signal; processing the optical signal by using a polarization beam splitter, an optical local oscillator, and an oscilloscope, to obtain the first electrical signal; or processing the optical signal by using a polarization beam splitter, an optical local oscillator, a 90 degree hybrid, a balanced photodetector, and an oscilloscope, to obtain the first electrical signal.

According to a fourth aspect, an embodiment of this application provides a device. The device includes a processor, and the processor is configured to perform the method according to any one of the first aspect and the implementations of the first aspect; or the processor is configured to execute instructions or a computer program in a memory, to perform the method according to any one of the second aspect and the implementations of the second aspect.

In a possible implementation, the device further includes the memory. The memory is configured to store the instructions or the computer program, and the processor is configured to execute the instructions or the computer program in the memory, to trigger the device to perform method according to any one of the first aspect and the implementations of the first aspect; or the processor is configured to execute the instructions or the computer program in the memory, to perform the method according to any one of the second aspect and the implementations of the second aspect.

According to a fifth aspect, an embodiment of this application provides a device, including an interface circuit and a processing circuit. The interface circuit is configured to receive and/or send data, and the processing circuit is configured to process data.

In an example, the device may be used in a first apparatus. In this case:

The interface circuit is configured to receive an optical signal sent by a second apparatus via an optical module. The processing circuit is configured to: perform optical-to-electrical conversion on the optical signal to obtain a first electrical signal, add first noise to the first electrical signal to obtain a second electrical signal, perform forward error correction FEC decoding on the second electrical signal, determine a first error ratio of the second electrical signal, and in response to the first error ratio being equal to a target error ratio, determine an optical transmission performance parameter based on the first noise.

In another example, the device may be used in a second apparatus. In this case:

The processing circuit is configured to obtain data that includes a preset test sequence. The interface circuit is configured to send, to a first apparatus via an optical module, the data that includes the preset test sequence, to facilitate the first apparatus to determine an optical transmission performance parameter based on the data.

According to a sixth aspect, an embodiment of this application provides a computer-readable storage medium, including instructions or a computer program. When the instructions or the computer program is run on a computer, the computer is enabled to perform the method according to any one of the first aspect and the implementations of the first aspect; or when the instructions or the computer program is run on a computer, the computer is enabled to perform the method according to any one of the second aspect and the implementations of the second aspect.

According to a seventh aspect, an embodiment of this application provides a computer program product including instructions or a computer program. When the instructions or the computer program is run on a computer, the computer is enabled to perform the method according to any one of the first aspect and the implementations of the first aspect; or the computer is enabled to perform the method according to any one of the second aspect and the implementations of the second aspect.

According to an eighth aspect, an embodiment of this application provides a communication system. The communication system includes a first apparatus that performs the method according to any one of the first aspect and the implementations of the first aspect, and a second apparatus that performs the method according to any one of the second aspect and the implementations of the second aspect.

In a possible implementation, the communication system further includes an optical module, and the optical module may be inserted into a receptacle reserved in the second apparatus.

According to a ninth aspect, an embodiment of this application provides a chip, including an interface circuit and a processing circuit. The chip is configured to perform the method according to any one of the first aspect and the implementations of the first aspect, or perform the method according to any one of the second aspect and the implementations of the second aspect.

### BRIEF DESCRIPTION OF DRAWINGS

To describe the technical solutions in embodiments of this application or the prior art more clearly, the following briefly describes the accompanying drawings for describing embodiments or the prior art. It is clear that, the accompanying drawings in the following descriptions show only some embodiments recorded in this application, and a person of ordinary skill in the art may still derive other drawings from these accompanying drawings without creative efforts.
FIG. 1 is a schematic flowchart of determining an optical transmission performance parameter in the prior art;
FIG. 2a is a diagram of an example application scenario according to an embodiment of this application;
FIG. 2b is a diagram of another example application scenario according to an embodiment of this application;
FIG. 2c is a diagram of still another example application scenario according to an embodiment of this application;
FIG. 2d is a diagram of an example application scenario according to an embodiment of this application;
FIG. 2e is a diagram of another example application scenario according to an embodiment of this application;
FIG. 2f is a diagram of another example application scenario according to an embodiment of this application;
FIG. 3 is a schematic flowchart of a method for determining optical transmission performance according to an embodiment of this application;
FIG. 4a is a schematic flowchart of a method for determining optical transmission performance according to an embodiment of this application;
FIG. 4b is a schematic flowchart of another method for determining optical transmission performance according to an embodiment of this application;
FIG. 4c is a schematic flowchart of still another method for determining optical transmission performance according to an embodiment of this application;
FIG. 5a is a schematic flowchart of determining a TDECQ according to an embodiment of this application;
FIG. 5b is another schematic flowchart of determining a TCC according to an embodiment of this application;
FIG. 6 is a diagram of a structure of an apparatus for determining optical transmission performance according to an embodiment of this application;
FIG. 7 is a diagram of a structure of a device according to an embodiment of this application;
FIG. 8 is a diagram of a structure of another device according to an embodiment of this application; and
FIG. 9 is a diagram of a structure of a chip according to an embodiment of this application.

### DESCRIPTION OF EMBODIMENTS

Embodiments of this application provide a method and an apparatus for determining optical transmission performance, to determine optical transmission performance.

The optical transmission performance may represent quality of an optical signal sent by a transmitter apparatus. The optical transmission performance may be measured by using an optical transmission performance parameter. Before sending data to a receiver apparatus, the transmitter apparatus may modulate the data. The optical transmission performance parameter is related to a data modulation scheme of the transmitter apparatus.

In an example, if the transmitter apparatus modulates the data in an intensity modulation scheme, the optical transmission performance parameter may be a TDECQ or a TECQ. The intensity modulation may include PAM4. In other words, when the data is modulated in the intensity modulation scheme, the data modulation scheme may be PAM4.

In another example, if the transmitter apparatus modulates the data in a coherent modulation scheme, the optical transmission performance parameter may be a TCC. The coherent modulation may include DP-16QAM or DP-32QAM. In other words, when the data is modulated in the coherent modulation scheme, the data modulation scheme may be DP-16QAM or DP-32QAM.

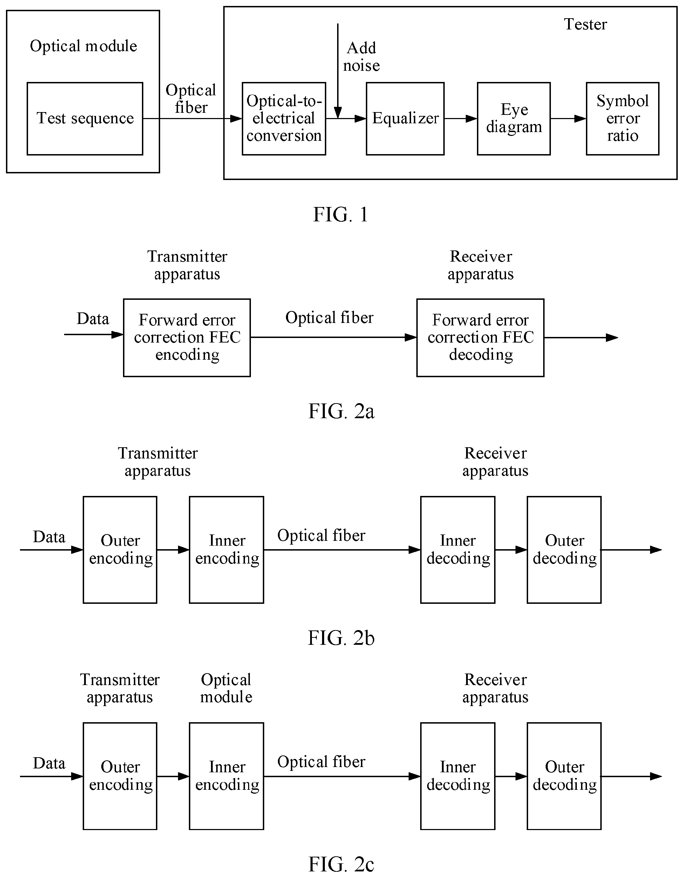

Currently, procedures of determining a TDECQ and a TECQ may be shown in FIG. 1.

FIG. 1 is a schematic flowchart of determining an optical transmission performance parameter in the prior art. It should be noted herein that, both the procedures of determining the TDECQ and the TECQ are the procedure shown in FIG. 1. A length of an optical fiber between an optical module and a tester determines a type of a parameter that can be determined in the procedure shown in FIG. 1. Specifically, if the length of the optical fiber is relatively short, the parameter determined in the procedure shown in FIG. 1 is the TECQ; or if the length of the optical fiber is relatively long, the parameter determined in the procedure shown in FIG. 1 is the TDECQ. It may be understood that a difference between the TDECQ and the TECQ lies in that the optical fiber link shown in FIG. 1 varies. The optical fiber link varies in optical fiber length, link insertion loss, and link dispersion value. The TECQ may include a short optical fiber, and a loss and dispersion of the optical fiber can be ignored. The TDECQ may include a long optical fiber, and a loss and dispersion of the TDECQ should meet standard requirements.

The following describes the procedure shown in FIG. 1.

The optical module converts a test sequence into an optical signal, and sends the optical signal to the tester. The tester may also be referred to as a test apparatus or a test device. This is not specifically limited in embodiments of this application.

The tester receives the optical signal sent by the optical module. The tester performs the following steps on the received optical signal.
1: Perform optical-to-electrical conversion on the optical signal to obtain an electrical signal.

In an example, the optical signal may be converted by using a photodiode, to obtain the electrical signal.

2: Add noise to the electrical signal, to obtain an electrical signal to which the noise is added.

3: Process, by using an equalizer, the electrical signal to which the noise is added, to obtain a processed electrical signal.

4: Obtain an eye diagram (eye diagram) corresponding to the processed electrical signal.

In an example, the eye diagram corresponding to the electrical signal may be presented by using an oscilloscope, and the eye diagram presented by the oscilloscope is obtained.

5: Determine a symbol error ratio based on the eye diagram.

The symbol error ratio may also be referred to as a symbol error rate, and the symbol error rate mentioned herein may be an error rate of a PAM4 symbol.

6: Compare the symbol error ratio determined in step 4 with a target symbol error ratio; and if the symbol error ratio determined in step 4 is the same as the target symbol error ratio, determine the TDECQ or the TECQ based on the noise added in step 2; or if the symbol error ratio determined in step 4 is different from the target symbol error ratio, adjust magnitude of the added noise, and repeatedly perform steps 2 to 6.

Currently, a TCC determining manner is similar to the TDECQ (or TECQ) determining method. Differences are mainly reflected in the following two points:
1. During determining of a TCC, after a tester receives an optical signal, a process of converting the optical signal into an electrical signal is complex. A process in which the tester converts the optical signal into the electrical signal is not described in detail herein.
2. During determining of a symbol error ratio, instead of determining the symbol error ratio based on an eye diagram, data processed by a signal recovery device is demodulated, and demodulated data is compared with data sent by an optical module, to determine the symbol error ratio. A function of the signal recovery device is similar to that of the foregoing equalizer, and a difference lies in that the signal recovery device may perform equalization on a signal input to the signal recovery device, and also perform an operation like signal compensation.

With development of communication technologies, currently, a transmitter apparatus may perform FEC encoding on data before converting the data into an optical signal and sending the optical signal to a receiver. For example, an optical module performs the FEC encoding on the data. However, in this scenario, the foregoing manners of determining the TDECQ, the TECQ, and the TCC is no longer applicable. Therefore, in the scenario in which the transmitter apparatus performs the FEC encoding on the data before converting the data into the optical signal and sending the optical signal to the receiver, how to determine optical transmission performance is a problem to be resolved currently.

The following describes possible application scenarios of this application.

FIG. 2a is a diagram of an example application scenario according to an embodiment of this application.

As shown in FIG. 2a, a transmitter apparatus may perform FEC encoding on data, and send, to a receiver apparatus, data obtained through the FEC encoding. The transmitter apparatus may perform electrical-to-optical conversion on the data obtained through the FEC encoding, to obtain an optical signal, and send the optical signal to the receiver apparatus. Correspondingly, after receiving the data sent by the transmitter apparatus, the receiver apparatus may perform FEC decoding on the data. The receiver apparatus may perform optical-to-electrical conversion on the received optical signal, to obtain an electrical signal, and further perform the FEC decoding on the electrical signal.

In an example, during specific implementation of performing the FEC encoding on the data, the transmitter apparatus may perform concatenated FEC encoding on the data, where the concatenated FEC encoding may include outer encoding and inner encoding.

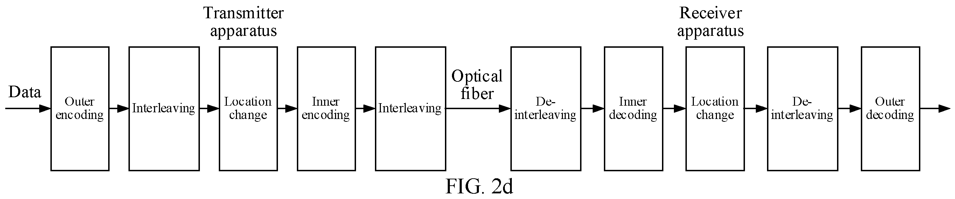

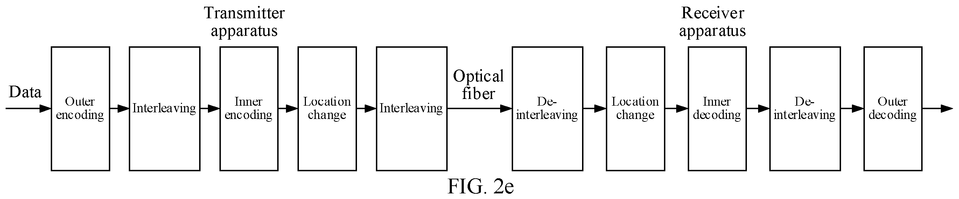

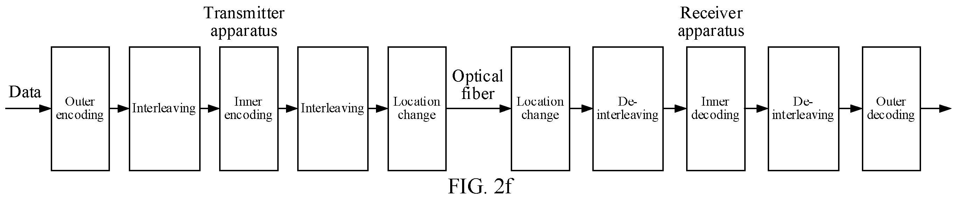

FIG. 2b is a diagram of another example application scenario according to an embodiment of this application. As shown in FIG. 2b, a transmitter apparatus may perform outer encoding on data. Further, a second apparatus or an optical module further performs inner encoding on data obtained through the outer encoding, and sends, to a receiver apparatus, data obtained through the inner encoding. In a specific example, refer to FIG. 2c for understanding. FIG. 2c is a diagram of still another example application scenario according to an embodiment of this application. As shown in FIG. 2c, a transmitter apparatus may perform outer encoding on data, and send, to an optical module, data obtained through the outer encoding, and the optical module further performs inner encoding on the data obtained through the outer encoding. The transmitter apparatus or the optical module may perform electrical-to-optical conversion on data obtained through the inner encoding, to obtain an optical signal, and send the optical signal to a receiver apparatus. Correspondingly, after receiving data sent by the transmitter apparatus, the receiver apparatus may perform inner decoding on the data, and further perform outer decoding on data obtained through the inner decoding. The receiver apparatus may perform optical-to-electrical conversion on the received optical signal, to obtain an electrical signal, and further perform the inner decoding on the electrical signal. In some scenarios, before further performing the inner encoding on the data obtained through the outer encoding, the transmitter apparatus may further perform corresponding processing on the data obtained through the outer encoding, for example, perform processing such as data interleaving and/or data location change. Correspondingly, an object of the inner encoding performed by the transmitter apparatus is data obtained by performing the corresponding processing on the data obtained through the outer encoding. In addition, after performing the inner encoding, the transmitter apparatus may also perform processing such as data interleaving and/or data location change on the data obtained through the inner encoding. Correspondingly, the data sent by the transmitter apparatus to the receiver apparatus is data obtained by performing the processing such as the data interleaving and/or the data location change on the data obtained through the inner encoding. An operation performed by the receiver apparatus is an inverse operation of an operation performed by the transmitter apparatus. Details are not described herein again. Specifically, refer to FIG. 2d, FIG. 2e, and FIG. 2f. FIG. 2d, FIG. 2e, and FIG. 2f are diagrams of other three example application scenarios according to embodiments of this application. FIG. 2d, FIG. 2e, and FIG. 2f are not described in detail herein.

The following describes, with reference to the accompanying drawings, a method for determining optical transmission performance according to an embodiment of this application.

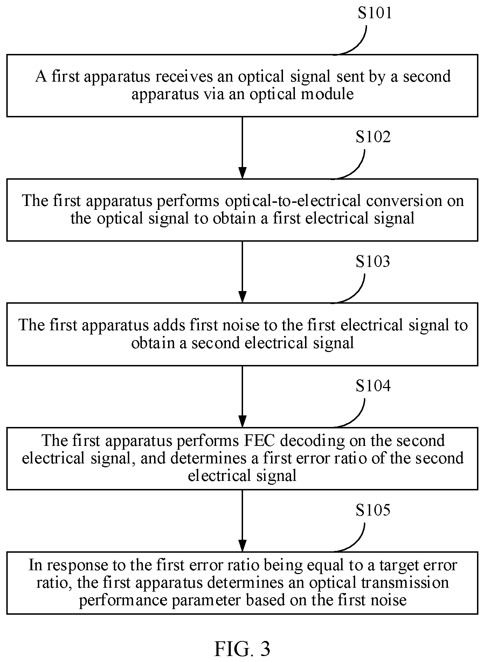

FIG. 3 is a schematic flowchart of a method for determining optical transmission performance according to an embodiment of this application. The method shown in FIG. 3 includes the following S101 to S105.

S101: A first apparatus receives an optical signal sent by a second apparatus via an optical module.

In this embodiment of this application, the first apparatus is a data receiver, the second apparatus is a data transmitter, a receptacle may be reserved in the second apparatus, and the optical module may be inserted into the receptacle reserved in the second apparatus. Because the optical module is inserted into the receptacle reserved in the second apparatus, in some scenarios, the optical module may alternatively be considered as a part of the second apparatus. Certainly, the optical module may alternatively be understood as a device independent of the second apparatus. This is not specifically limited in embodiments of this application. A type of the optical module may be a linear pluggable optics (linear pluggable optics or linear-drive pluggable optics, LPO) module, a near-packaged optics (near-packaged optics, NPO) module, or a co-packaged optics (co-packaged optics, CPO) module.

In an example, the first apparatus may be a network device. For example, the first apparatus may be a router or a switch. In another example, the first apparatus may be a tester.

In an example, the second apparatus may be a network device. For example, the second apparatus may be a router or a switch. In another example, the second apparatus may be a test board.

The second apparatus may obtain data, and send the data to the first apparatus via the optical module. The optical module may perform electrical-to-optical conversion on the data to obtain the optical signal, and send the optical signal to the first apparatus. In a process in which the optical signal is transferred to the first apparatus through an optical fiber, noise may be introduced to cause signal distortion of the optical signal.

In a specific example, the second apparatus and/or the optical module may encode the foregoing data to obtain encoded data. Further, the optical module performs electrical-to-optical conversion on the encoded data, to obtain the optical signal, and sends the optical signal to the first apparatus. In other words, the optical signal may be an optical signal obtained by performing the electrical-to-optical conversion by the optical module on the encoded data, and the encoded data is data obtained by encoding the data.

A specific encoding scheme of encoding the data is not specifically limited in embodiments of this application.

In an example, FEC encoding may be performed on the data. In other words, the encoded data is data obtained by performing the FEC encoding on the data. In a specific example, the second apparatus may perform the FEC encoding on the data, to obtain the encoded data; and further, the optical module performs the electrical-to-optical conversion on the encoded data, to obtain the optical signal. That the second apparatus performs the FEC encoding on the data may be that a host chip of the second apparatus performs the FEC encoding on the data. In another specific example, after obtaining the data, the second apparatus may send the data to the optical module, and the optical module performs the FEC encoding on the data, to obtain the encoded data; and further performs the electrical-to-optical conversion on the encoded data, to obtain the optical signal. In this case, the encoded data may include a plurality of FEC codewords. In embodiments of this application, a codeword type of the FEC codeword may be any one of a Hamming code, a BCH code, an LDPC code, an RS code, and an RM code.

In another example, concatenated FEC encoding may be performed on the data. The concatenated FEC encoding includes outer encoding and inner encoding. In other words, the encoded data may be data obtained by performing the concatenated FEC encoding on the data. A process of the concatenated FEC encoding may include: first performing the outer encoding on the data, to obtain outer encoded data; and then performing the inner encoding on the outer encoded data, to obtain inner encoded data. In a scenario of the concatenated FEC encoding, the encoded data obtained by performing the concatenated FEC encoding on the data is the foregoing inner encoded data. In this case, a codeword type of an inner codeword or an outer codeword included in the encoded data may be any one of a Hamming code, a BCH code, an LDPC code, an RS code, and an RM code.

In an example, the second apparatus may perform the concatenated FEC encoding on the data, and send, to the optical module, the obtained encoded data. That the second apparatus performs the concatenated FEC encoding on the data may be that a host chip of the second apparatus performs the concatenated FEC encoding on the data.

In another example, the second apparatus may perform the outer encoding on the data, to obtain the outer encoded data; and send, to the optical module, the outer encoded data. Further, the optical module performs the inner encoding on the outer encoded data, to obtain the inner encoded data. That the second apparatus performs the outer encoding on the data may be that a host chip of the second apparatus performs the outer encoding on the data.

The data is not specifically limited in embodiments of this application. In an example, the data may be service data. In another example, the data may be a preset test sequence. That is, the preset test sequence may be used to test optical transmission performance. In a specific scenario, before the optical module is delivered from a factory, the optical module may be inserted into the receptacle reserved in the second apparatus, and the optical transmission performance is tested by using the preset test sequence.

The test sequence (test sequence) is not specifically limited in embodiments of this application, and the test sequence may be any sequence suitable for testing the optical transmission performance. In a specific example, the test sequence may be any one of a pseudo-random sequence, a square wave, a short stress pattern random quaternary sequence, or a scrambled idle (scrambled idle) sequence. In some scenarios, the test sequence may also be referred to as a test pattern (test pattern).

In an example, before the encoded data is converted into the optical signal, signal modulation may be further performed. In other words, the optical signal is obtained by modulating the encoded data. In an example, intensity modulation may be performed on the encoded data. For example, the encoded data is modulated using PAM4 or PAM6. In other words, in comparison with conventional technologies, this application supports determining the optical transmission performance in a scenario in which the intensity modulation is performed on the encoded data. In another example, coherent modulation may be performed on the encoded data. For example, DP-16QAM or DP-32QAM is performed on the encoded data. In other words, this application supports determining the optical transmission performance in a scenario in which the coherent modulation is performed on the encoded data.

S102: The first apparatus performs optical-to-electrical conversion on the optical signal to obtain a first electrical signal.

After receiving the optical signal, the first apparatus may first perform the optical-to-electrical conversion on the optical signal. In this embodiment of this application, a specific implementation in which the first apparatus performs the optical-to-electrical conversion on the optical signal is related to the foregoing scheme of modulating the encoded data.

In a specific example, if the optical signal is obtained by performing the intensity modulation on the encoded data, the first apparatus may perform the optical-to-electrical conversion on the optical signal by using an optical-to-electrical converter like a photodiode, to obtain the first electrical signal.

In another specific example, if the optical signal is obtained by performing the coherent modulation on the encoded data, the first apparatus may process the optical signal by using a polarization beam splitter, an optical local oscillator, and an oscilloscope, to obtain the first electrical signal. Specifically, the first apparatus may split the optical signal into two optical signals by using the polarization beam splitter, and mix the two optical signals with an optical signal of the optical local oscillator by using a 90 degree hybrid, to obtain four processed optical signals. Further, the four processed optical signals are input to the oscilloscope, to obtain the first electrical signal.

S103: The first apparatus adds first noise to the first electrical signal to obtain a second electrical signal.

In this embodiment of this application, the first apparatus may add the first noise to the first electrical signal in a software or hardware processing manner. The first noise is not specifically limited in embodiments of this application. In an example, the first noise may be Gaussian noise.

S104: The first apparatus performs FEC decoding on the second electrical signal, and determines a first error ratio of the second electrical signal.

In embodiments of this application, the FEC decoding is an inverse operation of the FEC encoding. A specific algorithm of the FEC decoding is not specifically limited in embodiments of this application. As described above, in an example, the foregoing encoded data may be the data obtained by performing the concatenated FEC encoding on the data. Considering that there is a low probability of introducing error bits through the outer encoding, in this case, during specific implementation of S104, inner decoding may be performed on the second electrical signal.

In an example, after obtaining the second electrical signal, the first apparatus may further process the second electrical signal by using a signal recovery device, to obtain a third electrical signal. Further, FEC decoding is performed on the third electrical signal to obtain decoded data. After the decoded data is obtained, an error ratio of the third electrical signal may be obtained based on the decoded data. In this embodiment of this application, the error ratio of the third electrical signal may be used as the first error ratio.

In an example, during specific implementation of obtaining the error ratio of the third electrical signal based on the decoded data, the decoded data may be compared with the data, to obtain the error ratio of the third electrical signal. For example, in a scenario in which the encoded data is the data obtained by performing the FEC encoding on the data, the decoded data may be directly compared with the data, to obtain the error ratio of the third electrical signal. For another example, in a scenario in which the encoded data is the data obtained by performing the concatenated FEC encoding on the data, the decoded data may be compared with the outer encoded data obtained by performing the outer encoding on the data, to obtain the error ratio of the third electrical signal.

In embodiments of this application, the error ratio of the third electrical signal may be a bit error ratio, a symbol error ratio, or a codeword error ratio. In other words, the first error ratio may be the bit error ratio, the symbol error ratio, or the codeword error ratio.

The bit error ratio may also be referred to as a bit error rate, and may be a ratio of a quantity of error bits in the decoded data to a total quantity of bits in the decoded data.

The symbol error ratio may also be referred to as a symbol error rate, and may be a ratio of a quantity of error symbols in the decoded data to a total quantity of symbols in the decoded data. In an example, the symbol mentioned herein may be a symbol of a modulation signal, for example, may be a symbol of a PAM4 signal. One PAM4 symbol includes two bits. In another example, in a scenario in which the encoded data is the data obtained by performing the concatenated FEC encoding on the data, the symbol may be a symbol in an outer code.

The codeword error ratio may also be referred to as a codeword error rate, and may be a ratio of a quantity of error codewords in the decoded data to a total quantity of codewords in the decoded data. In the scenario in which the foregoing encoded data is the data obtained by performing the concatenated FEC encoding on the data, the codeword mentioned herein may be an inner codeword.

As described above, the second electrical signal is a signal obtained by adding the first noise to the first electrical signal. In an example, before processing the second electrical signal by using the signal recovery device, the first apparatus may further adjust a parameter of the signal recovery device based on the first noise, so that the signal recovery device can be adjusted to a proper status. In an example, the parameter of the signal recovery device may be specified in a standard. Correspondingly, when the second electrical signal is processed by using the signal recovery device, the second electrical signal is processed by using the signal recovery device with the adjusted parameter, to obtain the third electrical signal. In this manner, a small first error ratio may be determined. Correspondingly, the determined optical transmission performance may be more accurate. For example, an error ratio of a third electrical signal obtained by processing the second electriacal signal by using the signal recovery device before the parameter adjustment is an error ratio 1, and the error ratio of the third electrical signal obtained by processing the second signal by using the signal recovery device with the adjusted parameter is an error ratio 2. In this case, the error ratio 1 is greater than the error ratio 2.

In an example, if the optical signal is obtained by performing the intensity modulation on the encoded data, the signal recovery device is an equalizer. Correspondingly, during specific implementation of processing the second electrical signal by using the signal recovery device, the first apparatus may perform equalization on the second electrical signal by using the equalizer. The equalizer may also be referred to as a reference equalizer, and the two may be used interchangeably. In this scenario, the foregoing mentioned adjusting the parameter of the signal recovery device may refer to adjusting a parameter of the equalizer. In an example, the equalizer may be one or a combination of a feed-forward equalizer (feed-forward equalizer, FFE), a decision feedback equalizer (decision feedback equalizer, DFE), and a maximum likelihood sequence estimation (Maximum Likelihood Sequence Estimation, MLSE) equalizer. Parameters of the equalizer are not specifically limited in this application. For example, the equalizer is a T-spaced feed-forward equalizer (feed-forward equalizer, FFE) including a plurality of taps (taps), where T is a symbol period. The parameters of the equalizer may include parameters of the foregoing several taps. A sum of the parameters of the foregoing several taps may be equal to 1.

In another example, if the optical signal is obtained by performing the coherent modulation on the encoded data, the signal recovery device may include an equalizer and a signal compensator. Correspondingly, during specific implementation of processing the second electrical signal by using the signal recovery device, the first apparatus may perform equalization and signal compensation on the second electrical signal by using the equalizer and the signal compensator. In this scenario, the foregoing mentioned adjusting the parameter of the signal recovery device may also refer to adjusting a parameter of the equalizer. For the parameter of the equalizer, refer to the foregoing related descriptions. Details are not described herein again.

S105: In response to the first error ratio being equal to a target error ratio, the first apparatus determines an optical transmission performance parameter based on the first noise.

In this embodiment of this application, if the first error ratio is not equal to the target error ratio, power of the first noise may be adjusted, and S103 and S104 continue to be performed until the first error ratio is equal to the target error ratio.

In this embodiment of this application, the target error ratio is a preset error ratio, and is a high error ratio. A type of the target error ratio may be the same as a type of the first error ratio. For example, if the first error ratio is the bit error ratio, the target error ratio is also a bit error ratio; if the first error ratio is a symbol error ratio, the target error ratio is also a symbol error ratio; or if the first error ratio is a codeword error ratio, the target error ratio is also a codeword error ratio.

If the first error ratio is equal to the target error ratio, it indicates that after the first noise is added to the first electrical signal, the error ratio of the second electrical signal deteriorates to the target error ratio. Therefore, the first noise can represent, to a specific extent, quality of the optical signal sent by the second apparatus. In other words, the first noise can represent the optical transmission performance to a specific extent. Therefore, the first apparatus may determine, based on the first noise, the optical transmission performance parameter used to measure the optical transmission performance.

The optical transmission performance parameter mentioned in embodiments of this application may be a TDECQ, a TECQ, or a TCC. In a specific example, if the optical signal is obtained by performing the intensity modulation on the encoded data, the optical transmission performance parameter may be the TDECQ or the TECQ. If the optical signal is obtained by performing the coherent modulation on the encoded data, the optical transmission performance parameter may be the TCC.

In an example, the first apparatus may calculate the first noise according to a specific formula, to obtain the optical transmission performance parameter.

In another example, considering that an error ratio of an electrical signal can alternatively be determined based on an eye diagram of the electrical signal, in some implementations, the first apparatus may further obtain an eye diagram corresponding to the third electrical signal. For example, the first apparatus may process the third electrical signal by using the oscilloscope, to obtain the eye diagram corresponding to the third electrical signal. Further, a second error ratio of the third electrical signal is determined based on the eye diagram corresponding to the third electrical signal. For a specific implementation of obtaining the error ratio based on the eye diagram, an existing solution may be used. Details are not described herein again.

Similar to the first error ratio, the second error ratio may also be one of a bit error ratio, a symbol error ratio, and a codeword error ratio. In embodiments of this application, a type of the second error ratio may be the same as the type of the first error ratio, or a type of the second error ratio may be different from the type of the first error ratio. This is not specifically limited in embodiments of this application. For example, if the first error ratio is the bit error ratio, the second error ratio may be a bit error ratio, a symbol error ratio, or a codeword error ratio.

In a scenario in which the second error ratio is obtained based on the eye diagram of the third electrical signal, during specific implementation of S105, in response to the first error ratio being equal to the target error ratio, the first apparatus may determine the optical transmission performance parameter based on the first error ratio and the second error ratio.

In a specific example, during specific implementation of determining the optical transmission performance parameter based on the first error ratio and the second error ratio, the optical transmission performance parameter may be obtained based on the first noise and a quantitative relationship between the first error ratio and the second error ratio. For example, when the first error ratio and the second error ratio meet a preset quantitative relationship (for example, a multiple relationship), the optical transmission performance parameter may be determined based on the first noise. Correspondingly, if the first error ratio and the second error ratio do not meet a preset quantitative relationship, the power of the first noise may be further adjusted, and S103 and S104 continue to be performed until the first error ratio is equal to the target error ratio and the first error ratio and the second error ratio meet the preset quantitative relationship.

In another specific example, during specific implementation of determining the optical transmission parameter based on the first error ratio and the second error ratio, the second error ratio may be compared with a preset error ratio threshold, and if the second error ratio and the preset error ratio threshold meet a specific quantitative relationship, the optical transmission performance parameter is determined based on the first noise. That the second error ratio and the preset error ratio threshold meet the specific quantitative relationship may be that the second error ratio is greater than the preset error ratio threshold, that the second error ratio is less than the preset error ratio threshold, or that the second error ratio is equal to the preset error ratio threshold. This is not specifically limited in this embodiment of this application. Correspondingly, if the second error ratio and the preset error ratio threshold do not meet the specific quantitative relationship, the power of the first noise may be further adjusted, and S103 and S104 continue to be performed until the second error ratio and the preset error ratio threshold meet the specific quantitative relationship.

In another specific example, an initial optical transmission performance parameter may be determined based on the first noise, a correction parameter is obtained based on the first error ratio and the second error ratio, and then a final optical transmission performance parameter is obtained by using the correction parameter and the initial optical transmission performance parameter. For example, a specific operation is performed on the correction parameter and the initial optical transmission performance parameter, to obtain the optical transmission performance parameter. The specific operation is not specifically limited in this embodiment of this application. The specific operation includes but is not limited to operations such as multiplication and division.

In still another example, the first apparatus may determine the optical transmission performance parameter with reference to the first noise and second noise. The following describes a manner of determining the second noise with reference to steps A1 to A3.

Step A1: Obtain a fourth electrical signal based on a noise-free ideal signal; and add noise to the fourth electrical signal to obtain a fifth electrical signal.

In this embodiment of this application, similar to the foregoing test sequence, the ideal signal may alternatively be a pseudo-random sequence, a square wave, a short stress pattern random quaternary sequence, or a scrambled idle sequence.

In an example, FEC encoding may be performed on the ideal signal to obtain the fourth electrical signal.

In another example, inner encoding may be performed on the ideal signal to obtain the fourth electrical signal.

In this embodiment of this application, a manner of adding the noise to the fourth electrical signal may be the same as a manner of adding the noise to the first electrical signal. Therefore, for the manner of adding the noise to the fourth electrical signal, refer to the foregoing related description part of adding the first noise to the first electrical signal. Details are not described herein again.

Step A2: Perform FEC decoding on the fifth electrical signal, to determine a third error ratio of the fifth electrical signal.

In an example, if the fourth electrical signal is obtained by performing the inner encoding on the ideal signal, during specific implementation of step A2, inner decoding may be performed on the fifth electrical signal.

In this embodiment of this application, a decoding result obtained by performing the FEC decoding on the fifth electrical signal may be compared with the ideal signal, to obtain the third error ratio of the fifth electrical signal.

Step A3: In response to the third error ratio being equal to the target error ratio, determine, as the second noise, the noise added to the fourth electrical signal.

In this embodiment of this application, a type of the third error ratio may be the same as the type of the first error ratio. For example, if the first error ratio is the bit error ratio, the third error ratio is also a bit error ratio; if the first error ratio is the symbol error ratio, the third error ratio is also a symbol error ratio; or if the first error ratio is a codeword error ratio, the third error ratio is also a codeword error ratio.

After the third error ratio is determined, the third error ratio may be compared with the target error ratio. If the third error ratio is not equal to the target error ratio, power of the noise added to the fourth electrical signal may be adjusted, and step A2 continues to be performed until the third error ratio is equal to the target error ratio. When the third error ratio is equal to the target error ratio, the noise added to the fourth electrical signal is determined as the second noise.

It can be learned from the foregoing descriptions that, after the first noise is added to the first electrical signal, the error ratio of the second electrical signal deteriorates to the target error ratio, and after the second noise is added to the fourth electrical signal corresponding to the ideal signal, the error ratio of the second electrical signal deteriorates to the target error ratio. Therefore, a quantitative relationship between the first noise and the second noise may represent the quality of the optical signal sent by the second apparatus. Generally, considering that specific signal distortion is generally generated when transmission of the optical signal is performed through the optical fiber, the power of the first noise is generally greater than the power of the second noise. A smaller difference between the power of the first noise and the power of the second noise indicates that a waveform of the first electrical signal is closer to a waveform of the fourth electrical signal, and correspondingly, indicates better optical transmission performance. Conversely, a larger difference between the power of the first noise and the power of the second noise indicates a larger difference between the first electrical signal and the fourth electrical signal, and correspondingly, indicates poorer optical transmission performance. Therefore, in this scenario, the optical transmission performance parameter may be determined based on the first noise and the second noise.

In a specific example, considering that a value of a difference between the power of the first noise and the power of the second noise may represent the difference between the power of the first noise and the power of the second noise, the optical transmission performance parameter may be determined based on the value of the difference between the power of the first noise and the power of the second noise.

In another specific example, considering that a ratio between the power of the second noise and the function of the first noise may represent a difference between the power of the first noise and the power of the second noise, the optical transmission performance parameter may be determined based on the ratio between the power of the second noise and the power of the first noise.

It can be learned from the foregoing descriptions that, according to the solution in embodiments of this application, in a scenario in which a transmitter apparatus performs FEC encoding on data before converting the data into an optical signal and sending the optical signal to a receiver, the optical transmission performance may be determined.

The foregoing describes the method for determining optical transmission performance provided in an embodiment of this application. The following describes several possible implementations of this application by using an example in which the encoded data is data obtained by performing the concatenated FEC encoding on the test sequence.

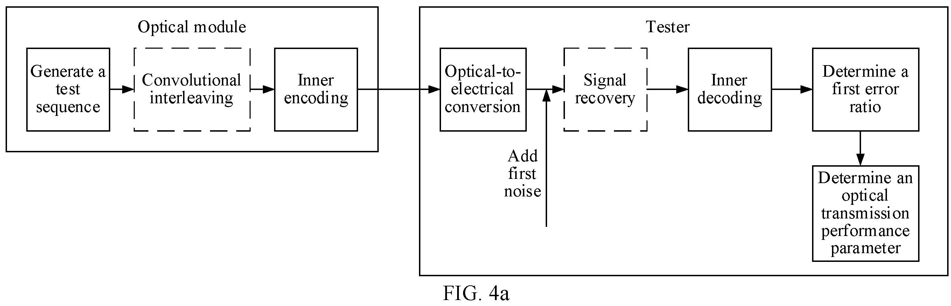

FIG. 4a is a schematic flowchart of a method for determining optical transmission performance according to an embodiment of this application.

As shown in FIG. 4a, an optical module may generate a test sequence, and perform inner encoding on the test sequence, to obtain encoded data. Optionally, before performing the inner encoding on the test sequence, the optical module may further perform convolutional interleaving on the test sequence. In other words, an object of the inner encoding performed by the optical module may be data obtained by performing the convolutional interleaving on the test sequence. In an example, the optical module may be inserted into a receptacle reserved in a second apparatus.

The optical module converts the encoded data into an optical signal and sends the optical signal to a tester through an optical fiber. The tester mentioned herein may be equivalent to the first apparatus mentioned in the foregoing embodiments. After receiving the optical signal sent by the optical module through the optical fiber, the tester may perform the method mentioned in the foregoing embodiment. Specifically, the tester first performs optical-to-electrical conversion on the optical signal to obtain a first electrical signal, and adds first noise to the first electrical signal to obtain a second electrical signal. Further, signal recovery is performed on the second electrical signal to obtain a third electrical signal. In addition, an error ratio (namely, a first error ratio) of the third electrical signal is determined. When the error ratio of the third electrical signal is equal to a target error ratio, optical transmission performance is determined by using the first noise added to the first electrical signal. In this scenario, the optical transmission performance may be considered as performance of the optical module.

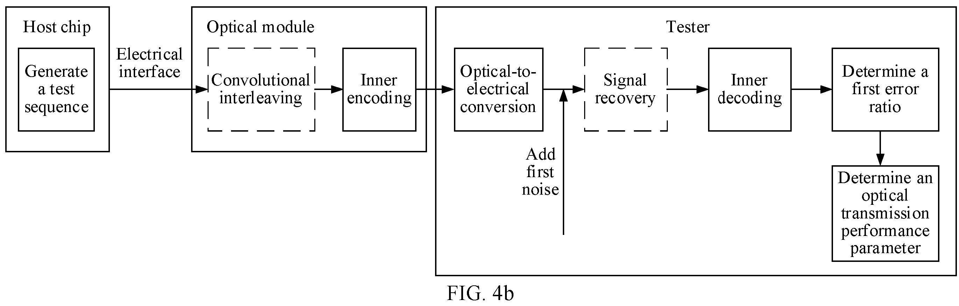

FIG. 4b is a schematic flowchart of another method for determining optical transmission performance according to an embodiment of this application.

A procedure shown in FIG. 4b is basically the same as the procedure in FIG. 4a. A difference lies in that, in FIG. 4b, a host chip of a second apparatus generates a test sequence, and sends the test sequence to an optical module through an electrical interface. In an example, the host chip may perform outer encoding on the test sequence, to obtain outer encoded data; and send, to the optical module, the outer encoded data. In an example, the optical module may be inserted into a receptacle reserved in the second apparatus. In this scenario, optical transmission performance may be considered as performance of the second apparatus into which the optical module is inserted.

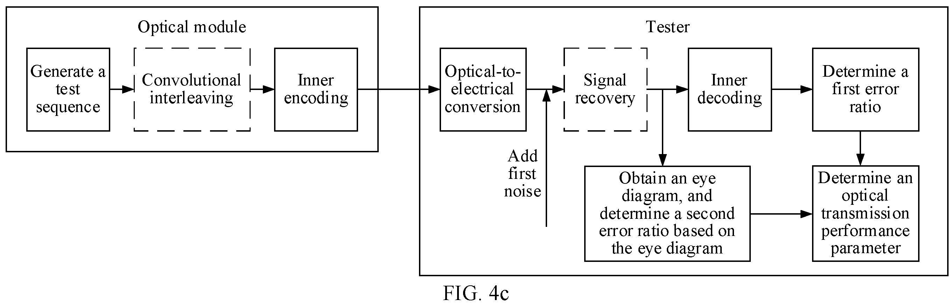

FIG. 4c is a schematic flowchart of still another method for determining optical transmission performance according to an embodiment of this application.

A procedure shown in FIG. 4c is basically the same as the procedure in FIG. 4a. A difference lies in that, in the procedure shown in FIG. 4c, after obtaining a third electrical signal, a tester may further obtain an eye diagram based on the third electrical signal, and determine a second error ratio of the third electrical signal based on the eye diagram. Correspondingly, when optical transmission performance is determined, the optical transmission performance may be determined with reference to a first error ratio and the second error ratio. For a specific implementation of determining the optical transmission performance with reference to the first error ratio and the second error ratio, refer to the foregoing related description part. Details are not described herein again.

As described above, if the optical signal is obtained by performing the intensity modulation on the encoded data, the optical transmission performance parameter may be the TDECQ or the TECQ. If the optical signal is obtained by performing the coherent modulation on the encoded data, the optical transmission performance parameter may be the TCC.

In embodiments of this application, the steps such as the signal recovery, the inner decoding, determining the second error ratio based on the eye diagram, and determining the first error ratio in FIG. 4a to FIG. 4c may be implemented by software, or may be implemented by a device supporting hardware programming, for example, a field programmable gate array (field programmable gate array, FPGA). This is not specifically limited in embodiments of this application. The following separately describes specific procedures of determining the TDECQ and the TCC.

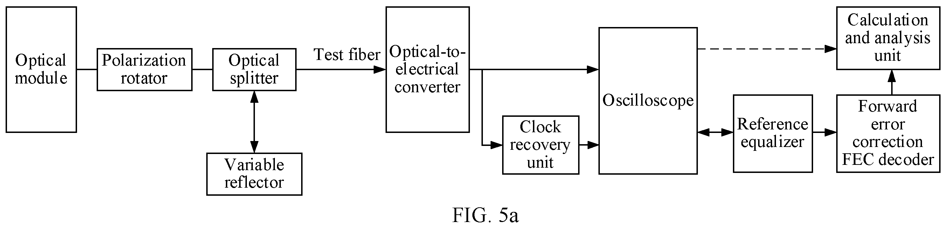

FIG. 5a is a schematic flowchart of determining a TDECQ according to an embodiment of this application.

As shown in FIG. 5a, an optical module sends a data sequence obtained through convolutional interleaving and FEC encoding (for example, inner encoding), and an optical signal that carries the data sequence passes through a polarization rotator (polarization rotator), an optical splitter (optical splitter), and a test fiber (test fiber), and enters a tester. After receiving the optical signal, the tester performs optical-to-electrical conversion on the optical signal by using an optical-to-electrical converter, to obtain an electrical signal. Further, a clock is obtained by using a clock recovery unit (clock recovery unit, CRU), to obtain a location of each intensity modulation symbol (for example, a PAM4 symbol) in the electrical signal. After the location of each mandatory modulation symbol is obtained, an eye diagram of the symbol may be obtained by using an oscilloscope. Then, data processed by the oscilloscope passes through a reference equalizer (reference equalizer) to reduce interference noise, and then undergoes operations such as analog-to-digital conversion (not shown in FIG. 5a) to obtain a binary data sequence. The binary data sequence is input to an FEC decoder (for example, an inner decoder) for error correction, and a corrected data sequence enters a calculation and analysis unit to obtain an actual error ratio through analysis.

In an example, the optical-to-electrical converter mentioned herein may be a photodiode.

The actual error ratio calculated by the calculation and analysis unit is compared with a target error ratio. If the actual error ratio is not equal to the target error ratio, the oscilloscope may be used to add noise to the electrical signal, and a parameter of the reference equalizer is adjusted based on the added noise, so that the equalizer is adjusted to an optimal status. Further, data obtained by performing equalization and processing of the reference equalizer on an electrical signal to which the noise is added is input to the FEC decoder for decoding, and a new error ratio may be obtained by processing a decoding result by the calculation and analysis unit. Further, the new error ratio is compared with the target error ratio. If the actual error ratio is not equal to the target error ratio, power of the noise added to the electrical signal is adjusted, and the foregoing steps such as the equalization, the FEC decoding, and determining the error ratio are repeatedly performed until the determined error ratio is equal to the target error ratio. In this case, the TDECQ is determined by using the noise added to the electrical signal.

In an example, a value of the target error ratio may change depending on whether the second apparatus or the optical module performs convolutional interleaving. If the second apparatus or the optical module performs the convolutional interleaving, a FEC error correction capability is stronger. In this case, the target error ratio is higher. If the second apparatus or the optical module does not perform the convolutional interleaving, a FEC error correction capability is slightly weaker. In this case, the target error ratio is smaller than the former. For example, the target error ratio when the second apparatus or the optical module performs the convolutional interleaving is set to 3e-3, and the target error ratio when the second apparatus or the optical module does not perform the convolutional interleaving is set to 1e-3.

Optionally, each time after noise is added to a signal, a second error ratio of an electrical signal after the noise is added may be estimated by using an eye diagram of the oscilloscope. In addition, whether to end a process of adjusting power of the noise added to the electrical signal is determined with reference to the second error ratio and the error ratio obtained by the calculation and analysis unit (referred to as a first error ratio in the following for short). For example, the first error ratio and the second error ratio jointly determine to end the process of adjusting the power of the noise added to the electrical signal. In this case, the power of the added noise is extracted to calculate the TDECQ. In an example, when the first error ratio is equal to the target error ratio, and the second error ratio and a corresponding error ratio meet a preset quantitative relationship, the process of adjusting the power of the noise added to the electrical signal may be ended. In another example, when the first error ratio is equal to the target error ratio, and the first error ratio and the second error ratio meet a preset quantitative relationship, the process of adjusting the power of the noise added to the electrical signal may be ended.

In addition, the following should be noted:

Data obtained through inner decoding is different from data on which equalization is just performed. The data obtained through the inner decoding is already a binary sequence with 0s and 1s, and an error ratio cannot be obtained based on an eye diagram of the data obtained through the inner decoding. Before the inner decoding, the data on which the equalization is just performed is still an analog signal. An eye diagram of the data on which the equalization is just performed can be obtained to estimate an error ratio.

The polarization rotator is configured to adjust a polarization direction of the optical signal, to facilitate testing.

The optical splitter and a variable reflector (variable reflector) are configured to adjust a return loss (return loss). The return loss is a type of interference noise.

A dispersion parameter of the test fiber is specified in a standard.

The parameter of the reference equalizer may be automatically adjusted according to an algorithm based on the noise, or manually adjusted based on the noise, to minimize error bits.

An algorithm used for inner decoding may be specified in a standard. A common algorithm is the Chase decoding algorithm.

In addition, an optical module may include a plurality of transmitters, and performance of each transmitter may be separately measured, that is, each transmitter may have a corresponding TDECQ. For example, an 800GBASE-DR4 optical module has four laser transmitters. During communication, the four laser transmitters may transmit four optical signals in parallel, and performance of each of the four transmitters may be measured separately.

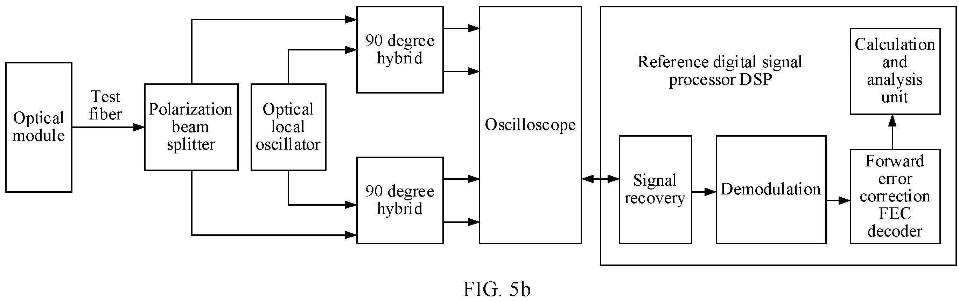

FIG. 5b is another schematic flowchart of determining a TCC according to an embodiment of this application.

An optical module sends a data sequence obtained through convolutional interleaving and FEC encoding (for example, inner encoding). An optical signal carrying the data sequence passes through a test fiber (test fiber) and enters a tester. After receiving the optical signal, the tester splits the optical signal into two optical signals by using a polarization beam splitter. The two optical signals and an optical signal of an optical local oscillator (optical local oscillator, OLO) enter 90 degree hybrids (90 degree hybrids) together to obtain four processed optical signals. As shown in FIG. 5b, the foregoing two optical signals and the optical signal of the optical local oscillator enter the two 90 degree hybrids together, and each 90 degree hybrid outputs two processed optical signals. The four processed optical signals are converted into an electrical signal, and a constellation (constellation) diagram of the received signal may be obtained based on the electrical signal. The electrical signal continues to enter a reference digital signal processor (digital signal processor, DSP), and the DSP is configured to perform processing such as signal recovery (recover signal) and demodulation (demodulation) on the electrical signal, to obtain a binary data sequence. The DSP may include a signal recovery device, and the signal recovery device is configured to perform the signal recovery on a signal input to the signal recovery device. The signal recovery includes processing such as signal equalization and signal compensation.

The binary data sequence is input to an FEC decoder (for example, an inner decoder) for error correction, and a corrected data sequence enters a calculation and analysis unit, to obtain an actual error ratio through analysis. The actual error ratio calculated by the calculation and analysis unit is compared with a target error ratio. If the actual error ratio is not equal to the target error ratio, the DSP adjusts power of noise. In addition, a parameter of the signal recovery device is adjusted based on adjusted noise, so that the signal recovery device reaches an optimal status. In addition, operations such as signal recovery that is performed by the signal recovery device with the adjusted parameter and performed on an electrical signal to which the noise is added, demodulation performed on a signal obtained through the signal recovery, FEC decoding performed on a demodulated signal, and determining an error ratio are sequentially performed, to obtain a new error ratio.

Further, the new error ratio is compared with the target error ratio. If the actual error ratio is not equal to the target error ratio, the power of the noise continues to be adjusted, and the foregoing steps such as the signal recovery, the demodulation, the FEC decoding, and determining the error ratio are repeatedly performed until the determined error ratio is equal to the target error ratio. In this case, the TCC is determined by using the added noise. Specifically, the power C of the added noise may be obtained when the determined error ratio is equal to the target error ratio, and the TCC is determined by using the power C of the noise.

In addition, in an example, the DSP repeats the foregoing noise addition and reduction procedure for an ideal signal without noise, until an error ratio of a signal obtained by adding noise to an ideal signal is equal to the target error ratio, and extracts power D of noise added to the ideal signal. Correspondingly, during specific implementation of determining the TCC by using the power C of the noise, the TCC may be determined by using the power D of the noise and the power C of the noise. In a specific example, the TCC may be determined by using a ratio between the power D of the noise and the power C of the noise. For example, the TCC may be calculated according to the following formula (1): $TCC = 10 log \left(\frac{D}{C}\right)$ Formula (1)

According to the method for determining optical transmission performance provided in the foregoing embodiments, embodiments of this application further provide a corresponding apparatus and device. The following describes the apparatus and device provided in embodiments of this application with reference to the accompanying drawings.

In embodiments of this application, the procedures of determining the TDECQ and the TCC in FIG. 5a and FIG. 5b may be implemented by software, or may be implemented by a device supporting hardware programming, for example, an FPGA. This is not specifically limited in embodiments of this application.

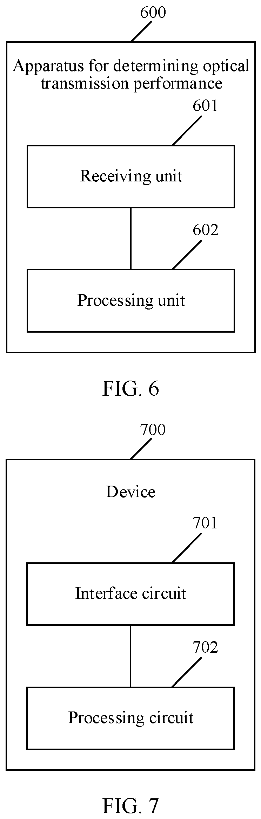

FIG. 6 is a diagram of a structure of an apparatus for determining optical transmission performance according to an embodiment of this application. The apparatus 600 for determining an optical transmission performance parameter shown in FIG. 6 may be used in the first apparatus provided in the foregoing method embodiments, and is configured to perform the method for determining optical transmission performance that is performed by the first apparatus and that is provided in the foregoing method embodiments.

In a specific example, the apparatus 600 includes a receiving unit 601 and a processing unit 602.

The receiving unit 601 is configured to receive an optical signal sent by a second apparatus via an optical module.

The processing unit 602 is configured to: perform optical-to-electrical conversion on the optical signal to obtain a first electrical signal, add first noise to the first electrical signal to obtain a second electrical signal, perform forward error correction FEC decoding on the second electrical signal, determine a first error ratio of the second electrical signal, and in response to the first error ratio being equal to a target error ratio, determine an optical transmission performance parameter based on the first noise.

In a possible implementation, the optical signal is an optical signal obtained by performing electrical-to-optical conversion by the optical module on encoded data, and the encoded data is data obtained by encoding data.

In a possible implementation, the encoded data is data obtained by performing FEC encoding on the data.

In a possible implementation, the encoded data is data obtained by performing concatenated FEC encoding on the data, and the concatenated FEC encoding includes inner encoding and outer encoding.

In a possible implementation, performing the FEC decoding on the second electrical signal includes: performing inner decoding on the second electrical signal.

In a possible implementation, the outer encoding is performed by the second apparatus, and the inner encoding is performed by the optical module; or both the inner encoding and the outer encoding are performed by the second apparatus.

In a possible implementation, the first error ratio includes a bit error ratio BER, a symbol error ratio SER, or a codeword error ratio CER.

In a possible implementation, performing the forward error correction FEC decoding on the second electrical signal, and determining the first error ratio of the second electrical signal includes: processing the second electrical signal by using a signal recovery device, to obtain a third electrical signal; and performing FEC decoding on the third electrical signal, and using an error ratio of the third electrical signal as the first error ratio.

In a possible implementation, the processing unit 602 is further configured to: before the first apparatus processes the second electrical signal by using the signal recovery device, adjust a parameter of the signal recovery device based on the first noise. Correspondingly, processing the second electrical signal by using the signal recovery device, to obtain the third electrical signal includes: processing the second electrical signal by using the signal recovery device with the adjusted parameter, to obtain the third electrical signal.

In a possible implementation, decoding the third electrical signal, and using the error ratio of the third electrical signal as the first error ratio includes: decoding the third electrical signal to obtain decoded data; comparing the decoded data with the data, to obtain the error ratio of the third electrical signal; and using the error ratio of the third electrical signal as the first error ratio.

In a possible implementation, the processing unit 602 is further configured to: obtain an eye diagram corresponding to the third electrical signal; and determine a second error ratio of the third electrical signal based on the eye diagram corresponding to the third electrical signal. In response to the first error ratio being equal to the target error ratio, determining the optical transmission performance parameter based on the first noise includes: in response to the first error ratio being equal to the target error ratio, determining the optical transmission performance parameter based on the first error ratio and the second error ratio.

In a possible implementation, processing the second electrical signal by using the signal recovery device, to obtain the third electrical signal includes: performing equalization on the second electrical signal by using the signal recovery device, to obtain the third electrical signal.

In a possible implementation, processing the second electrical signal by using the signal recovery device, to obtain the third electrical signal includes: performing equalization and signal compensation on the second electrical signal by using the signal recovery device, to obtain the third electrical signal.

In a possible implementation, determining the optical transmission performance parameter based on the first noise includes: determining the optical transmission performance parameter based on the first noise and second noise, where the second noise is determined in the following manner:
obtaining a fourth electrical signal based on a noise-free ideal signal, and adding noise to the fourth electrical signal to obtain a fifth electrical signal; performing FEC decoding on the fifth electrical signal, to determine a third error ratio of the fifth electrical signal; and in response to the third error ratio being equal to the target error ratio, determining, as the second noise, the noise added to the fourth electrical signal.

In a possible implementation, determining the optical transmission performance parameter based on the first noise and the second noise includes: determining the optical transmission performance parameter based on a ratio between power of the second noise and power of the first noise.

In a possible implementation, the data is a preset test sequence.

In a possible implementation, the test sequence includes a pseudo-random sequence, a square wave, a short stress pattern random quaternary sequence, or a scrambled idle sequence.

In a possible implementation, a codeword type corresponding to an inner codeword or an outer codeword included in the encoded data includes any one of the following: a Hamming code, a BCH code, a low-density parity-check LDPC code, an RS code, and an RM code.

In a possible implementation, the optical signal is obtained by performing intensity modulation on the encoded data; or the optical signal is obtained by performing coherent modulation on the encoded data.

In a possible implementation, when the intensity modulation is used, a modulation scheme of the encoded data includes 4-level pulse amplitude modulation PAM4 or 6-level pulse amplitude modulation PAM6.

In a possible implementation, when the coherent modulation is used, a modulation scheme of the encoded data includes: dual polarization 16-state quadrature amplitude modulation DP-16QAM, or dual polarization 32-state quadrature amplitude modulation DP-32QAM.

In a possible implementation, the optical transmission performance parameter includes: a transmitter and dispersion eye closure quaternary TDECQ, a transmitter eye closure quaternary TECQ, or a transmitter constellation closure TCC.

In a possible implementation, performing the optical-to-electrical conversion on the optical signal to obtain the first electrical signal includes: performing the optical-to-electrical conversion on the optical signal by using a photodiode, to obtain the first electrical signal; or processing the optical signal by using a polarization beam splitter, an optical local oscillator, and an oscilloscope, to obtain the first electrical signal.

FIG. 7 is a diagram of a structure of a device according to an embodiment of this application. The device 700 shown in FIG. 7 includes an interface circuit 701 and a processing circuit 702. The interface circuit 701 is configured to receive and/or send data, and the processing circuit 702 is configured to process data.

In an example, the device 700 may be used in a first apparatus, and is configured to perform the method that is performed by the first apparatus and provided in the foregoing method embodiments. In this case:

The interface circuit 701 is configured to receive an optical signal sent by a second apparatus via an optical module. The processing circuit 702 is configured to: perform optical-to-electrical conversion on the optical signal to obtain a first electrical signal, add first noise to the first electrical signal to obtain a second electrical signal, perform forward error correction FEC decoding on the second electrical signal, determine a first error ratio of the second electrical signal, and in response to the first error ratio being equal to a target error ratio, determine an optical transmission performance parameter based on the first noise.

In another example, the device 700 may be used in a second apparatus, and is configured to perform the method that is performed by the second apparatus and provided in the foregoing method embodiments. In this case:

The processing circuit 702 is configured to obtain data that includes a preset test sequence. The interface circuit 701 is configured to send, to a first apparatus via an optical module, the data that includes the preset test sequence, to facilitate the first apparatus to determine an optical transmission performance parameter based on the data.

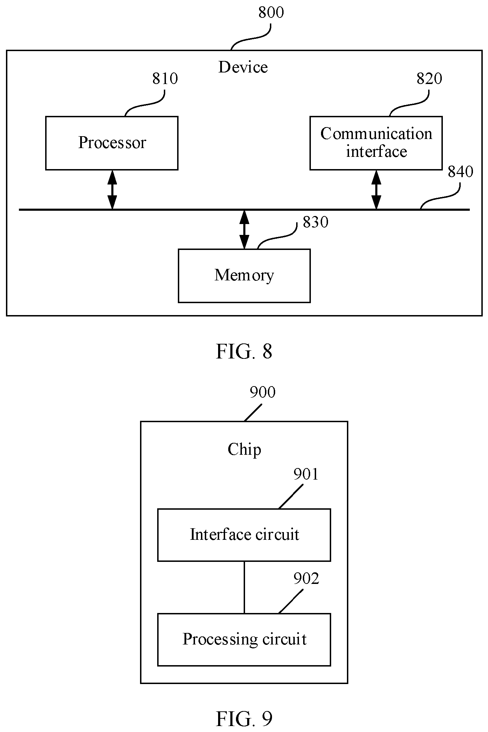

FIG. 8 is a diagram of a structure of a device according to an embodiment of this application.

In an example, the device 800 shown in FIG. 8 may correspond to the first apparatus mentioned in the foregoing embodiments, and is configured to perform the method that is performed by the first apparatus and provided in the foregoing method embodiments.

In another example, the device 800 shown in FIG. 8 may correspond to the second apparatus mentioned in the foregoing embodiments, and is configured to perform the method that is performed by the second apparatus and provided in the foregoing method embodiments.

Refer to FIG. 8. The device 800 includes a processor 810. The device 800 may include one or more processors 810. In FIG. 8, one processor is used as an example. The processor 810 is configured to perform the method that is performed by the first apparatus and provided in the foregoing method embodiments, or the processor 810 is configured to perform the method that is performed by the second apparatus and provided in the foregoing method embodiments.

The processor 810 may be a central processing unit (central processing unit, CPU), an NP, or a combination of a CPU and an NP. The processor 810 may further include a hardware chip. The hardware chip may be an ASIC, a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

In an example, the device 800 further includes a memory 830. The memory 830 may include a volatile memory (English: volatile memory), for example, a random access memory (random access memory, RAM). Alternatively, the memory 830 may include a non-volatile memory (English: non-volatile memory), for example, a flash memory (English: flash memory), a hard disk drive (hard disk drive, HDD), or a solid-state drive (solid-state drive, SSD). Alternatively, the memory 830 may include a combination of the foregoing types of memories. When the device 800 corresponds to the first apparatus, the memory 830 may store, for example, the foregoing target error ratio. When the device corresponds to the second apparatus, the memory may store, for example, the foregoing data.

Optionally, the memory 830 stores an operating system and a program, an executable module or a data structure, a subset thereof, or an extended set thereof, where the program may include various operation instructions for implementing various operations. The operating system may include various system programs, to implement various basic services and process a hardware-based task. The processor 810 may read the program in the memory 830, to implement the method provided in embodiments of this application.

In an example, the device 800 further includes a communication interface 820. In this embodiment of this application, the processor 810, the communication interface 820, and the memory 830 may be connected through a bus system or in another manner. An example in which the processor 810, the communication interface 820, and the memory 830 are connected through the bus system 840 is used in FIG. 8.

The communication interface 820 is configured to receive and/or send data. For example, when the device 800 corresponds to the second apparatus mentioned in the foregoing embodiments, the communication interface 820 is configured to send, to the first apparatus via an optical module, data that includes a preset test sequence. When the device 800 corresponds to the first apparatus mentioned in the foregoing embodiments, the communication interface 820 is configured to receive an optical signal sent by the second apparatus via an optical module.

The bus system 840 may be a peripheral component interconnect (peripheral component interconnect, PCI) bus, an extended industry standard architecture (extended industry standard architecture, EISA) bus, or the like. The bus system 840 may be classified into an address bus, a data bus, a control bus, and the like. For ease of representation, only one thick line is for representing the bus in FIG. 8, but this does not mean that there is only one bus or only one type of bus.

FIG. 9 is a diagram of a structure of a chip according to an embodiment of this application. The chip 900 shown in FIG. 9 includes an interface circuit 901 and a processing circuit 902. The interface circuit 901 is configured to receive and/or send data, and the processing circuit 902 is configured to process data.

In an example, the chip 900 may be used in a first apparatus, and is configured to perform the method that is performed by the first apparatus and provided in the foregoing method embodiments. In this case:

The interface circuit 901 is configured to receive an optical signal sent by a second apparatus via an optical module. The processing circuit 902 is configured to: perform optical-to-electrical conversion on the optical signal to obtain a first electrical signal, add first noise to the first electrical signal to obtain a second electrical signal, perform forward error correction FEC decoding on the second electrical signal, determine a first error ratio of the second electrical signal, and in response to the first error ratio being equal to a target error ratio, determine an optical transmission performance parameter based on the first noise.

In another example, the chip 900 may be used in a second apparatus, and is configured to perform the method that is performed by the second apparatus and provided in the foregoing method embodiments. In this case:

The processing circuit 902 is configured to obtain data that includes a preset test sequence. The interface circuit 901 is configured to send, to a first apparatus via an optical module, the data that includes the preset test sequence, to facilitate the first apparatus to determine an optical transmission performance parameter based on the data.

An embodiment of this application provides a computer-readable storage medium, including instructions or a computer program. When the instructions or the computer program is run on a computer, the computer is enabled to perform the method in the foregoing method embodiments.

An embodiment of this application provides a computer program product including instructions or a computer program. When the instructions or the computer program is run on a computer, the computer is enabled to perform the method in the foregoing method embodiments.

An embodiment of this application provides a communication system. The communication system includes the first apparatus and the second apparatus mentioned in the foregoing embodiments. The communication system is configured to determine an optical transmission performance parameter.

In a possible implementation, the communication system further includes an optical module, and the optical module may be inserted into a receptacle reserved in the second apparatus.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

A person skilled in the art should be aware that in the foregoing one or more examples, services described in the present invention may be implemented by hardware, software, firmware, or any combination thereof. When the software is used for the implementation, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible by a general-purpose computer or a dedicated computer.

The objectives, technical solutions, and beneficial effects of the present invention are further described in detail in the foregoing specific implementations. It should be understood that the foregoing is merely specific implementations of the present invention.

The foregoing embodiments are merely used to describe the technical solutions of this application, but not to limit the technical solutions. Although this application is described in detail with reference to the foregoing embodiments, a person of ordinary skill in the art should understand that modifications may still be made to the technical solutions described in the foregoing embodiments or equivalent replacements are made to some technical features thereof, without departing from the scope of the technical solutions in embodiments of this application.

## Claims

1. A method for determining optical transmission performance, wherein the method comprises:
receiving, by a first apparatus, an optical signal sent by a second apparatus via an optical module;
performing, by the first apparatus, optical-to-electrical conversion on the optical signal to obtain a first electrical signal;
adding, by the first apparatus, first noise to the first electrical signal to obtain a second electrical signal;
performing, by the first apparatus, forward error correction FEC decoding on the second electrical signal, and determining a first error ratio of the second electrical signal; and
in response to the first error ratio being equal to a target error ratio, determining, by the first apparatus, an optical transmission performance parameter based on the first noise.

2. The method according to claim 1, wherein the optical signal is an optical signal obtained by performing electrical-to-optical conversion by the optical module on encoded data, and the encoded data is data obtained by encoding data.

3. The method according to claim 2, wherein the encoded data is data obtained by performing FEC encoding on the data.

4. The method according to claim 2, wherein the encoded data is data obtained by performing concatenated FEC encoding on the data, and the concatenated FEC encoding comprises inner encoding and outer encoding.

5. The method according to claim 4, wherein the performing, by the first apparatus, the FEC decoding on the second electrical signal comprises:
performing, by the first apparatus, inner decoding on the second electrical signal.

6. The method according to claim 4 or 5, wherein the outer encoding is performed by the second apparatus, and the inner encoding is performed by the optical module; or both the inner encoding and the outer encoding are performed by the second apparatus.

7. The method according to any one of claims 1 to 6, wherein the first error ratio comprises:
a bit error ratio BER, a symbol error ratio SER, or a codeword error ratio CER.

8. The method according to any one of claims 2 to 6, wherein the performing, by the first apparatus, the forward error correction FEC decoding on the second electrical signal, and determining the first error ratio of the second electrical signal comprises:
processing, by the first apparatus, the second electrical signal by using a signal recovery device, to obtain a third electrical signal; and
performing, by the first apparatus, FEC decoding on the third electrical signal, and using an error ratio of the third electrical signal as the first error ratio.

9. The method according to claim 8, wherein before the processing, by the first apparatus, the second electrical signal by using the signal recovery device, the method further comprises:
adjusting, by the first apparatus, a parameter of the signal recovery device based on the first noise; and
correspondingly, the processing, by the first apparatus, the second electrical signal by using the signal recovery device, to obtain the third electrical signal comprises:
processing, by the first apparatus, the second electrical signal by using the signal recovery device with the adjusted parameter, to obtain the third electrical signal.

10. The method according to claim 8 or 9, wherein the performing, by the first apparatus, the FEC decoding on the third electrical signal, to obtain decoded data, and using the error ratio of the third electrical signal as the first error ratio comprises:
decoding, by the first apparatus, the third electrical signal to obtain decoded data;
comparing, by the first apparatus, the decoded data with the data, to obtain the error ratio of the third electrical signal; and
using, by the first apparatus, the error ratio of the third electrical signal as the first error ratio.

11. The method according to any one of claims 8 to 10, wherein the method further comprises:
obtaining, by the first apparatus, an eye diagram corresponding to the third electrical signal; and
determining, by the first apparatus, a second error ratio of the third electrical signal based on the eye diagram corresponding to the third electrical signal; and
in response to the first error ratio being equal to the target error ratio, the determining, by the first apparatus, the optical transmission performance parameter based on the first noise comprises:
in response to the first error ratio being equal to the target error ratio, determining, by the first apparatus, the optical transmission performance parameter based on the first error ratio and the second error ratio.

12. The method according to any one of claims 8 to 11, wherein the processing, by the first apparatus, the second electrical signal by using the signal recovery device, to obtain the third electrical signal comprises:
performing, by the first apparatus, equalization on the second electrical signal by using the signal recovery device, to obtain the third electrical signal.

13. The method according to any one of claims 8 to 11, wherein the processing, by the first apparatus, the second electrical signal by using the signal recovery device, to obtain the third electrical signal comprises:
performing, by the first apparatus, equalization and signal compensation on the second electrical signal by using the signal recovery device, to obtain the third electrical signal.

14. The method according to any one of claims 1 to 13, wherein the determining the optical transmission performance parameter based on the first noise comprises:
determining the optical transmission performance parameter based on the first noise and second noise, wherein
the second noise is determined in the following manner:
obtaining a fourth electrical signal based on a noise-free ideal signal; and adding noise to the fourth electrical signal to obtain a fifth electrical signal;
performing FEC decoding on the fifth electrical signal, to determine a third error ratio of the fifth electrical signal; and
in response to the third error ratio being equal to the target error ratio, determining, as the second noise, the noise added to the fourth electrical signal.

15. The method according to claim 14, wherein the determining the optical transmission performance parameter based on the first noise and the second noise comprises:
determining the optical transmission performance parameter based on a ratio between power of the second noise and power of the first noise.

16. The method according to any one of claims 2 to 6, wherein the data is a preset test sequence.

17. The method according to claim 16, wherein the test sequence comprises:
a pseudo-random sequence, a square wave, a short stress pattern random quaternary sequence, or a scrambled idle sequence.

18. The method according to any one of claims 4 to 6, wherein a codeword type corresponding to an inner codeword or an outer codeword comprised in the encoded data comprises any one of the following:
a Hamming code, a BCH code, a low-density parity-check LDPC code, a Reed-Solomon RS code, and an RM code.

19. The method according to any one of claims 2 to 6, wherein
the optical signal is obtained by performing intensity modulation on the encoded data; or
the optical signal is obtained by performing coherent modulation on the encoded data.

20. The method according to any one of claims 2 to 6 or 19, wherein when the intensity modulation is used, a modulation scheme of the encoded data comprises:
4-level pulse amplitude modulation PAM4 or 6-level pulse amplitude modulation PAM6.

21. The method according to any one of claims 2 to 6 or 19, wherein when the coherent modulation is used, a modulation scheme of the encoded data comprises:
dual polarization 16-state quadrature amplitude modulation DP-16QAM, dual polarization 32-state quadrature amplitude modulation DP-32QAM, or dual polarization 64-state quadrature amplitude modulation DP-64QAM.

22. The method according to any one of claims 1 to 21, wherein the optical transmission performance parameter comprises:
a transmitter and dispersion eye closure quaternary TDECQ, a transmitter eye closure quaternary TECQ, or a transmitter constellation closure TCC.

23. The method according to any one of claims 1 to 22, wherein the performing, by the first apparatus, the optical-to-electrical conversion on the optical signal to obtain the first electrical signal comprises:
performing, by the first apparatus, the optical-to-electrical conversion on the optical signal by using a photodiode, to obtain the first electrical signal; or
processing, by the first apparatus, the optical signal by using a polarization beam splitter, an optical local oscillator, and an oscilloscope, to obtain the first electrical signal.

24. An apparatus for determining optical transmission performance, wherein the apparatus is used in a first apparatus, and the apparatus comprises a unit configured to perform the method according to any one of claims 1 to 23.

25. A computer program product, comprising a computer program, wherein when the computer program is run on a processor, the method according to any one of claims 1 to 23 is performed.
